# FASCICULE DE BREVET EUROPEEN

(11) **EP 0 471 605 B1**
(45) Date de publication et mention de la délivrance du brevet: **22.03.1995**
(21) Numéro de dépôt: 91402159.7
(22) Date de dépôt: 01.08.1991
(51) Int. Cl.: B29C 70/24, F02K 1/82, F02K 9/97

(54) **Dispositif de protection thermique de la paroi interne d'une structure creuse soumise à un écoulement ablatif et son procédé de fabrication**
Vorrichtung zum thermischen Schutz der inneren Wand einer einem ablativen Gasstrom unterworfenen hohlen Struktur und Verfahren zu deren Herstellung
Device for thermal protection of an inner wall of a hollow structure subjected to an ablative gasflow and method for producing the same hollow structure

(30) Priorité: 14.08.1990 FR 9010322
(43) Date de publication de la demande: 19.02.1992
(73) Titulaire: AEROSPATIALE Société Nationale Industrielle, 75781 Paris Cédex 16 (FR)
(72) Inventeur: Ferrier née Pegot, Christiane, F-91430 Igny (FR); Vernotte, Jean-Marie, F-92170 Vanves (FR)
(74) Mandataire: Lepeudry-Gautherat, Thérèse

(56) Documents cités:
- EP-A- 0 032 858
- EP-A- 0 150 566
- FR-A- 2 569 237
- US-A- 3 577 294
- US-A- 4 854 990

## Description

L'invention se rapporte à un dispositif de protection thermique de la paroi interne d'une structure creuse telle que la virole d'une chambre de moteur statoréacteur, soumise à un écoulement ablatif de gaz corrosifs, à grande vitesse et haute température.

Dans l'état actuel de la technique, les couches de protection thermiques de telles structures sont constituées de composites à liants organiques, organo-métalliques ou minéraux capables d'inclure des renforts du type poudres, fibres, tissus organiques ou minéraux. Sous l'action des gaz chauds, le matériau ablatable subit le phénomène de pyrolyse. La pyrolyse s'accompagne d'une dégradation de la chaîne carbonée ou organo-silicique du liant qui rend la scorie fragile et cassante dans la masse. Pour pallier cette fragilisation, la couche de protection thermique est couramment armée, suivant des techniques diverses.

Il est en effet connu que, pour un matériau ablatable de ce type, soumis à l'érosion des gaz chauds et aux vibrations, l'ablation est réduite lorsque le matériau est armé. L'armature noyée dans le matériau isolant peut être métallique ou non, tissée ou fibreuse.

Le brevet FR-A-2.569.237, cf les préambles des revendications 1 et 6, décrit un tel dispositif armé de protection thermique, et le processus de fabrication correspondant, pour la protection thermique de parois longées par des veines d'écoulement de gaz, telles que les chambres de moteurs statoréacteurs.

L'intérêt de ce brevet antérieur a été de permettre l'élaboration d'une couche de protection souple, par exemple en silicone, renforcée en particulier par une armature orientée par rapport à l'écoulement des gaz, qui confère une bonne tenue à l'ablation et aux arrachements provoqués par les vibrations dues au fonctionnement du moteur.

Pour améliorer la tenue mécanique d'une structure après pyrolyse du liant, il est nécessaire de renforcer la protection thermique de telle manière qu'après pyrolyse de la matrice dans toute l'épaisseur de ladite protection, le matériau résiduel obtenu constitue une chemise isolante, non fissurée ni fissurable, protégeant la structure externe pendant le fonctionnement du moteur.

L'une des façons avantageuses de structurer une matrice est de réaliser des structurations en trois dimensions par technique de bobinage de fil dans le sens radial et dépose de fil dans le sens longitudinal sur un mandrin muni de picots. La matrice est habituellement amenée par injection de résine non chargée liquide, dans les mailles de la structure ainsi préparée.

Cette technique présente cependant l'inconvénient de figer le diamètre de la protection thermique, puisqu'elle utilise des fils circonférentiels incapables de se déformer lors de la mise en pression de la chambre, en particulier initialement lors du fonctionnement de l'accélérateur intégré dans la chambre, tandis que la structure métallique se déformera, ce qui induira la rupture de la protection thermique par ces fils circonférentiels et des risques de rupture de la liaison collée.

L'invention propose par conséquent un dispositif de protection thermique, qui présente l'avantage d'être souple et capable d'allongement, lui permettant ainsi de suivre la déformation propre à la structure lors de la mise en pression de la chambre.

Un objet de la présente invention consiste en un dispositif de protection thermique de la paroi interne d'une structure creuse soumise à un écoulement ablatif à haute température en présence de vibrations, formé d'une structuration en trois dimensions et d'un liant, lequel dispositif étant constitué d'une armature fibreuse obtenue par bobinage de fibres ou fils réfractaires à bouclettes et par des picots d'armement radial et de renforcement également en fibres réfractaires avantageusement torsadées, les boucles des fils à bouclettes de deux couches superposées s'enchevêtrant pour participer à la bonne tenue à l'ablation de la structure creuse. Les picots sont, pendant la fabrication du dispositif, plantés sur un mandrin (1) selon une trajectoire en forme de spirale ménageant des couloirs hélicoïdaux dont le pas axial de la spirale correspond à l'angle de bobinage du fil, et selon un pas d'implantation qui détermine la densité des renforts radiaux que constituent lesdits picots.

Un autre objet de l'invention consiste en un procédé de fabrication d'un dispositif de protection thermique de la paroi interne d'une structure creuse soumise à un écoulement ablatif à haute température en présence de vibrations, procédé selon lequel :
- on bobine des fibres ou fils réfractaires à bouclettes sur un mandrin au fond de couloirs hélicoïdaux ménagés par des picots plantés en spirale sur ledit mandrin
- on dépose une résine d'imprégnation au fond des couloirs, en même temps que les fils
- on polymérise sous pression à la température adaptée au système de résine, l'ensemble pré-imprégné
- et on ramène la protection thermique obtenue à l'épaisseur voulue par usinage interne et externe.

Avantageusement le fil est déposé en même temps qu'une résine d'imprégnation, au fond des couloirs hélicoïdaux à l'aide d'une buse orientable en toutes directions, ajustant le guidage et la tension du fil, des ailettes de protection et de guidage complémentaire du fil encadrant la buse, et s'étendant au-dessus du mandrin.

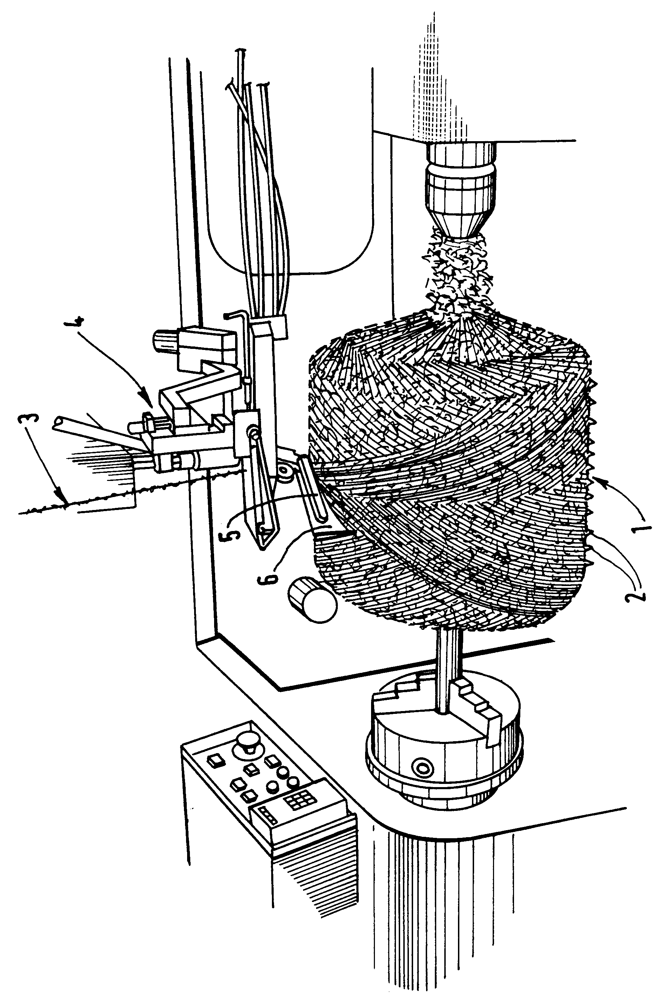

L'invention sera décrite maintenant en référence à la figure unique qui représente en perspective un dispositif de bobinage d'une protection thermique. On voit sur la figure un mandrin mousse 1 sur lequel sont plantés des petits picots 2 selon une trajectoire en forme de spirale ménageant des couloirs hélicoïdaux. Le pas axial de la spirale et le pas d'implantation des picots définissent, pour un diamètre donné, l'angle que l'on veut faire suivre au bobinage de l'armature et la densité des renforts radiaux que constituent lesdits picots.

Sur le mandrin à picots sont déposés des fibres ou un fil à bouclettes 3 au moyen d'une machine à bobiner 4 munie d'une commande numérique qui permet de respecter les paramètres de bobinage imposés par l'implantation des picots. Le fil est déposé, en même temps que la résine d'imprégnation par un distributeur dit "à passette" constitué d'une buse orientable 5 susceptible de pivoter dans toutes directions sous l'action de vérins non représentés. La buse distribue le fil dans la direction recherchée, des ailettes de protection 6 disposées de chaque côté et qui encadrent ladite buse et débordent au dessus du mandrin, ayant pour fonction complémentaire de guider le fil dans les couloirs délimités par les rangées de picot 2.

Une tension est appliquée sur le fil, de façon connue en soi, pour bien faire pénétrer le fil en même temps que la résine d'imprégnation, et assurer un bon compactage entre les couches successives. Pour améliorer encore ce compactage, les couloirs sont remplis pas à pas en déposant par exemple à l'aller au moins une demi-couche par millimètre, l'autre demi-couche étant déposée pendant le retour de la bobineuse.

Le fil à bouclettes 3 qui constitue un des éléments de base de la structure, a été choisi avec soin. Il est constitué de plusieurs mèches dont les principales assurent la tenue mécanique de la mèche bobinée, et les autres constituent la boucle. Il contient au moins une matière appartenant au groupe constitué par le carbone, la silice, le carbure de silicium, le verre, le kevlar, l'alumine ou un alumino-silicate. Les boucles des fils à bouclettes de deux couches superposées peuvent s'enchevêtrer, et participent à la bonne tenue à l'ablation de la structure en jouant le rôle de renfort radial. C'est dire l'intérêt d'obtenir la densité de bouclettes la mieux appropriée pour répondre à ces exigences.

De même le diamètre des boucles, et la densité du fil dans la boucle ont un effet sur l'aptitute du fil à pénétrer au fond du couloir constitué par les picots. Des boucles de faible diamètre ou trop denses en fil, empêcheraient aux couches successives de s'insérer les unes dans les autres au fond du couloir.

La résine d'imprégnation mentionnée plus haut est déposée sous le fil sous forme d'un ruban continu. Sa composition est ajustée de telle façon que le mélange soit suffisamment thixotrope pour ne pas couler. De plus, sa durée de vie en pot doit être ajustée pour permettre de réaliser le dispositif. Le liant est une résine thermodurcissable organique ou semi-organique ou minérale telle que phénolique, furannique, polyimide, polystyrilpyridine, silicone ou silicate, ou encore il est une résine à caractère élastomère telle une silicone. Il peut aussi être chargé de matière telle que poudre de carbure de silicium, de silice, de nitrure de silicium.

Quand aux picots qui sont d'autres constituants importants de la nouvelle protection recherchée, ils forment une armature radiale avantageusement constituée de fibres de carbures de silicium imprégnées phénoliques et ils complètent l'armement et le renforcement de la structure. Ils peuvent renfermer aussi une matière d'un même groupe que ceux indiqués pour le fil à bouclettes. Le torsadage des fibres améliore par ailleur l'efficacité des picots.

Enfin, après enroulement, le dispostif est polymérisé sous pression et après polymérisation, la protection thermique obtenue est ramenée à l'épaisseur voulue par usinage interne et externe.

Ce procédé de mise en oeuvre garantit l'obtention d'une protection thermique structurée en trois dimensions, conservant ses possibilités d'allongement grâce à l'angle de bobinage, et ayant une tenue améliorée à l'ablation grâce à l'utilisation du fil à bouclettes spécialement étudié.

Pour illustrer un dispostif de protection selon l'invention, on donne ci-après un premier exemple de réalisation :
- Le bobinage est effectué sur un mandrin d'un diamètre de 100 mm
- Le pas des picots est de 2,5 mm en circonférenciel et 5 mm en axial, ce qui représente une densité de 7,37 picots /cm²
- Le fil utilisé possède 160 bouclettes d'un diamètre de 4 mm, par mètre. Il est constitué d'une mèche d'àme de 500 fils, d'un fil bouclette de 500 brins et d'un fil de liaison de 250 brins. La tension appliquée est de 1,5 kg pour un angle moyen de bobinage de 45°.

Selon un second exemple de réalisation :
- le bobinage est effectué sur un mandrin d'un diamètre de 330 mm
- le pas des picots est tel que leur densité est de 7,24 picots /cm²
- le fil utilisé est constitué de deux mèches d'âme à 500 filaments, d'un fil bouclettes à 250 filaments et d'un fil de liaison à 250 filaments. Le nombre des bouclettes au mètre est de 160. Le diamètre des bouclettes est de 8 mm. La tension appliquée est de 5 kg pour un angle moyen de bobinage de 60°.
Pour les deux exemples précédents on obtient une protection thermique, après polymérisation et usinage, qui donne de bons résultats aux essais de tenue à l'ablation et aux vibrations.

Ainsi la protection obtenue est adaptée à résister à une température de 2000°C en milieu oxydant pendant au moins 30 minutes. Elle peut aussi résister plusieurs dizaines de minutes à des vibrations haute-fréquence de l'ordre de 1000 à 2500 Hertz. Enfin pour obtenir des bons résultats, on notera que le taux de structuration doit atteindre au moins 20 % en poids du dispositif.

## Revendications

1. Dispositif de protection thermique de la paroi interne d'une structure creuse soumise à un écoulement ablatif à haute température en présence de vibrations, formé d'une structuration en trois dimensions et d'un liant et comportant des picots d'armement radial et de renforcement, caractérisé en ce qu'il est constitué d'une armature fibreuse obtenue par bobinage de fibres ou fils réfractaires à bouclettes (3) et par lesdits picots (2) qui sont également en fibres réfractaires avantageusement torsadées, en ce que les boucles des fils à bouclettes de deux couches superposées, s'enchevêtrent pour participer à la bonne tenue à l'ablation de la structure creuse, et en ce que les picots sont, pendant la fabrication du dispositif, plantés sur un mandrin (1) selon une trajectoire en forme de spirale ménageant des couloirs hélicoïdaux dont le pas axial de la spirale correspond à l'angle de bobinage du fil, et selon un pas d'implantation qui détermine la densité des renforts radiaux que constituent lesdits picots.

2. Dispositif selon la revendication 1, caractérisé en ce que les fils à bouclettes (3) et les picots (2) contiennent au moins une matière appartenant au groupe constitué par le carbone, la silice, le carbure de silicium, le verre, le kevlar, l'alumine ou un alumino silicate.

3. Dispositif selon la revendication 1, caractérisé en ce que le liant est chargé de matière appartenant au moins à l'une des familles poudres de carbure de silicium, poudres de silice, poudres de nitrure de silicium, fibres de carbure de silicium, fibres de carbone, fibres de silice.

4. Dispositif selon la revendication 1, caractérisé en ce que les picots (2) sont constitués de fibres de carbure de silicium imprégnées phénoliques.

5. Dispositif selon la revendication 1, caractérisé en ce que la densité des picots (2) est d'au moins 7 picots par cm².

6. Procédé de fabrication d'un dispositif de protection thermique de la paroi interne d'une structure creuse soumise à un écoulement ablatif à haute température en présence de vibrations caractérisé en ce qu'il consiste :
- à bobiner des fibres ou fils réfractaires à bouclettes (3) sur un mandrin au fond des couloirs hélicoïdaux ménagés par des picots (2) plantés en spirale sur ledit mandrin ;
- à déposer une résine d'imprégnation au fond des couloirs, en même temps que les fils ;
- à polymériser sous pression à la température adaptée au système de résine, l'ensemble pré-imprégné ;
- et à ramener la protection thermique obtenue à l'épaisseur voulue par usinage interne et externe.

7. Procédé selon la revendication 6, caractérisé en ce que le fil (3) est déposé en même temps qu'une résine d'imprégnation, au fond des couloirs hélicoïdaux à l'aide d'une buse (5) orientable en toutes directions, ajustant le guidage et la tension du fil.

8. Procédé selon la revendication 7, caractérisé en ce que des ailettes (6) de protection et de guidage complémentaire du fil encadrent la buse (5), et s'étendent au-dessus du mandrin.

## Claims

1. Device for thermal protection of the inner wall of a hollow structure subjected to an ablative flow at high temperature in the presence of vibrations, which device is formed of a three-dimensional structure and of a binder, and comprises radial armament and reinforcement pins, characterised in that it is constituted by a fibrous armature obtained by winding refractory plush loop fibres or threads (3) and by the said pins (2), which are also made of refractory fibres, advantageously twisted; in that the loops of the plush loop threads of two superposed layers interlock to contribute to the high resistance to ablation of the hollow structure; and in that the pins, during the manufacture of the device, are placed on a mandrel (1) along a spiral-shaped path providing helical channels, in which the axial pitch of the spiral corresponds to the angle of winding of the thread, and according to an installation pitch which determines the density of the radial reinforcements constituted by the said pins.

2. Device according to Claim 1, characterised in that the plush loop threads (3) and the pins (2) contain at least one material belonging to the group constituted by carbon, silica, silicon carbide, glass, Kevlar, alumina or an alumino-silicate.

3. Device according to Claim 1, characterised in that the binder is filled with material belonging to at least one of the silicon carbide powder, silica powder, silicon nitride powder, silicon carbide fibre, carbon fibre or silica fibre families.

4. Device according to Claim 1, characterized in that the pins (2) are constituted by phenolic impregnated silicon carbide fibres.

5. Device according to Claim 1, characterized in that the density of the pins (2) is at least 7 pins per cm².

6. Method for manufacturing a device for thermal protection of the inner wall of a hollow structure subjected to an ablative flow at high temperature in the presence of vibrations, characterized in that it consists in:
- winding refractory plush loop fibres or threads (3) onto a mandrel at the bottom of the helical channels provided by pins (2) placed in a spiral on the said mandrel;
- depositing an impregnating resin at the bottom of the channels at the same time as the threads;
- polymerising the pre-impregnated assembly under pressure at the temperature which is suitable for the resin system;
- and bringing back the thermal protection obtained to the required thickness by internal and external machining.

7. Method according to Claim 6, characterized in that the thread (3) is deposited at the same time as an impregnating resin, at the bottom of the helical channels, by means of a nozzle (5) that can be orientated in all directions, adjusting the guiding and tension of the thread.

8. Method according to Claim 7, characterized in that wings (6), for protection and complementary guiding of the thread, frame the nozzle (5), and extend over the mandrel.

## Patentansprüche

1. Vorrichtung zum thermischen Schutz der inneren Wand einer hohlen Struktur, die einer ablativen Strömung bei einer hohen Temperatur in Anwesenheit von Vibrationen unterworfen ist, wobei die Vorrichtung aus einem dreidimensionalen Strukturaufbau und einem Bindemittel gebildet ist und Nadeln zur radialen Armierung und zur Verstärkung beinhaltet, dadurch gekennzeichnet, daß sie aus einer faserartigen Bewehrung gebildet ist, die durch Wicklung von hochschmelzenden Schlingenfasern oder -fäden (3) und durch die Nadeln (2) erhalten wird, die ebenso aus hochschmelzenden, vorteilhafterweise verdrillten Fasern bestehen, daß sich die Schleifen der Schlingenfäden zweier überlagerter Schichten ineinander verwickeln. um zu der hohen Widerstandsfähigkeit der hohlen Struktur gegenüber Ablation beizutragen, und daß die Nadeln während der Fertigung der Vorrichtung entlang einer Trajektorie in Form einer Spirale, die Schraubengänge ausspart, wobei die Steigung der Spirale in Axialrichtung dem Winkel der Fadenwicklung entspricht, und mit einem Implantationsabstand, der die Dichte der radialen, von den Nadeln gebildeten Verstärkungen bestimmt, auf eine Wickelhülse (1) gesteckt sind.

2. Vorrichtung nach Anspruch 1, dadurch gekennzeichnet, daß die Schlingenfäden (3) und die Nadeln (2) wenigstens ein Material enthalten, das zu der Gruppe gehört. die aus Kohlenstoff, Siliciumdioxid, Siliciumkarbid, Glas Kevlar, Aluminiumoxid oder einem Aluminiumsilikat gebildet wird.

3. Vorrichtung nach Anspruch 1, dadurch gekennzeichnet, daß dem Bindemittel ein Material zugesetzt ist, das wenigstens zu einer der Familien von Siliciumkarbidpulvern, Siliciumdioxidpulvern, Siliciumnitridpulvern, Siliciumkarbidfasern, Kohlenstoffasern und Siliciumdioxidfasern gehört.

4. Vorrichtung nach Anspruch 1, dadurch gekennzeichnet, daß die Nadeln (2) aus imprägnierten, phenolhaltigen Siliciuimkarbidfasern bestehen.

5. Vorrichtung nach Anspruch 1, dadurch gekennzeichnet, daß die Dichte der Nadeln (2) wenigstens 7 Nadeln pro cm² beträgt.

6. Verfahren zur Herstellung einer Vorrichtung zum thermischen Schutz der inneren Wand einer hohlen Struktur, die einer ablativen Strömung bei einer hohen Temperatur in Anwesenheit von Vibrationen unterworfen ist, dadurch gekennzeichnet, daß es folgendes enthält:
- Wickeln von hochschmelzenden Schlingenfasern oder -fäden (3) auf eine Wickelhülse am Boden von Schraubengängen, die von spiralförmig auf die Wickelhülse aufgesteckten Nadeln (2) ausgespart werden;
- Einbringen eines Imprägnierharzes am Boden der Durchgänge zur gleichen Zeit wie die Fasern;
- Polymerisieren des vorimprägnierten Komplexes unter Druck bei der für das Harzsystem geeigneten Temperatur;
- und Reduzieren des erhaltenen thermischen Schutzes auf die gewünschte Dicke durch innere und äußere Bearbeitung.

7. Verfahren nach Anspruch 6, dadurch gekennzeichnet, daß der Faden (3) zur gleichen Zeit wie ein Imprägnierharz am Boden der Schraubengänge mit Hilfe einer in alle Richtungen orientierbaren Düse eingebracht wird, wobei die Führung und die Spannung des Fadens eingestellt werden.

8. Verfahren nach Anspruch 7, dadurch gekennzeichnet, daß Flügel (6) zum Schutz und zur ergänzenden Führung des Fadens die Düse (5) umgeben und sich oberhalb der Wickelhülse erstrecken.
